(19) Europäisches Patentamt

European Patent Office

Office européen des brevets

(11) Veröffentlichungsnummer: **0 410 095 A1**

# (12) EUROPÄISCHE PATENTANMELDUNG

(21) Anmeldenummer: **90109391.4**

(22) Anmeldetag: **18.05.90**

(51) Int. Cl.⁵: **A01C  17/00**

(30) Priorität: **22.07.89 DE 3924333**

(43) Veröffentlichungstag der Anmeldung:
**30.01.91 Patentblatt  91/05**

(84) Benannte Vertragsstaaten:
**DE FR GB**

(71) Anmelder: **RAUCH LANDMASCHINENFABRIK GMBH**

**D-7573 Sinzheim(DE)**

(72) Erfinder: **Rauch, Norbert, Dipl.-Ing.**
**Bergseestrasse 49**
**D-7573 Sinzheim(DE)**

(74) Vertreter: **Dr.-Ing. Hans Lichti Dipl.-Ing. Heiner Lichti Dipl.-Phys. Dr. Jost Lempert**
**Postfach 41 07 60 Durlacher Strasse 31**
**D-7500 Karlsruhe 41(DE)**

(54) **Schleuderstreuer für rieselfähigen Dünger.**

(57) Ein Schleuderstreuer für rieselfähigen Dünger weist einen den Dünger enthaltenden Vorratsbehälter, dessen Boden zwei einstellbare Auslauföffnungen aufweist, und darunter umlaufende Schleuderscheiben (12) mit wenigstens zwei Wurfflügeln (22,23) auf, die auf der Schleuderscheibe parallel zu der Radialen in Drehrichtung versetzt angeordnet - zurückgestellt - sind. Um für verschiedene Düngersorten mit unterschiedlicher Kornform und Korngröße ein gleichmäßiges Streubild zu erhalten, sind bei einer gegebenen Streumenge und Arbeitsbreite die Rückstellung und die Länge der Wurfflügel (22,23) um so größer und ist ferner der die Relativlage zwischen Auslauföffnung und Schleuderscheibe bestimmende Aufgabepunkt (17) um so mehr entgegen der Drehrichtung der Schleuderscheibe und/oder nach außen verlagerbar, je unregelmäßiger die Kornform und/oder je kleiner die Korngröße des Düngers ist.

Fig. 5

# SCHLEUDERSTREUER FÜR RIESELFÄHIGEN DÜNGER

Die Erfindung betrifft einen Schleuderstreuer für rieselfähigen Dünger verschiedener Kornform und Korngröße mit einem den Dünger enthaltenden Vorratsbehälter, dessen Boden zwei einstellbare Auslauföffnungen aufweist, und mit darunter umlaufenden Schleuderscheiben mit wenigstens zwei Wurfflügeln, die auf der Schleuderscheibe parallel zur Radialen in Drehrichtung versetzt angeordnet - zurückgestellt - sind.

Eines der wesentlichen Probleme bei Schleuderstreuern besteht darin, eine gleichmäßige Düngerverteilung über die Arbeitsbreite des Streuers zu erreichen. Dies läßt sich am ehesten bei relativ kleinen Streumengen und/oder kleinen Arbeitsbreiten erreichen. Das Streubild zeigt dann einen flach-dreieckförmigen Verlauf, dessen Maximum in der Mitte hinter dem Streuer liegt und das nach beiden Seiten flach abfällt. Die Arbeitsbreite des Streuers ist diejenige Breite, bei der 50 % der gewünschten Streumenge ausgebracht worden sind. Beim Anschlußfahren kann dann eine Überlappung der Streubilder derart vorgenommen werden, daß sich die Streumengen jeder Fahrt so addieren, daß über die gesamte bestreute Fläche eine gleichmäßige Streudichte gegeben ist. Je größer die Streumenge und die Arbeitsbreite wird, um so stärker weicht das Streubild von der Dreiecksform ab und bildet im mittleren Bereich ein Wellenprofil mit nach außen relativ steil abfallenden Flanken. Je welliger das Profil ist, um so weniger ist durch Anschlußfahren eine solche Überlappung der Streubilder zu erreichen, daß eine gleichmäßige Streudichte erhalten wird.

Dieser negative Effekt auf das Streubild läßt sich hinsichtlich der Arbeitsbreite und einer bestimmten Düngersorte abmildern. Jeder Landwirt bzw. jeder landwirtschaftliche Betrieb arbeitet in der Regel mit nur einer definierten Arbeitsbreite, die durch die Sämaschine vorgegeben ist. Durch Auswahl entsprechender Schleuderscheiben, die auf die Arbeitsbreite und die gängigste Düngersorte abgestimmt sind, kann die breitenabhängige Überhöhung des Streubildes gemindert und zumindest für diese Düngersorte ein befriedigendes Streubild erzielt werden. Es verbleibt jedoch der negative Mengeneffekt und der negative Einfluß auf das Streubild bei Wechsel der Düngersorte.

Der Mengeneffekt wird weiterhin durch düngerspezifische Faktoren beeinflußt. So zeigen verschiedene Düngersorten bei gleicher effektiver Arbeitsbreite und gleicher Streumenge unterschiedliche Streubilder. Wird beispielsweise mit einem Dünger mit gleichmäßiger Kornform, im idealen Fall Kugelform, z. B. Kalkammonsalpeter oder Harnstoff, das gewünschte Streubild in Dreiecksform erzielt, so ergibt ein anderer Dünger mit unregelmäßiger Kornform, beispielsweise natürliche Mineraldünger, wie Kali, bei gleicher Streumenge mit den gleichen Schleuderscheiben und sonst gleicher Maschineneinstellung ein anderes Streubild, das - ähnlich wie beim Mengeneffekt - im mittleren Bereich ein Wellenprofil mit nach außen steil abfallenden Flanken zeigt.

Man hat diese negativen Einflüsse bisher durch Einzelmaßnahmen - verschiedene Rückstellung der Wurfflügel auf der Schleuderscheibe, verschiedene Länge der Wurfflügel, verschiedene Form der Wurfflügel und durch Drehzahlregulierung - zu beheben versucht. Damit ist es jedoch nicht gelungen, eine befriedigende Lösung hinsichtlich des Mengeneffektes einerseits und der düngerspezifischen Effekfe andererseits zu erzielen.

Der Erfindung liegt die Aufgabe zugrunde, einen Schleuderstreuer vorzuschlagen, bei dem die negativen Einflüsse düngerspezifischer Faktoren auf das Streubild weitgehend eliminiert werden.

Diese Aufgabe wird erfindungsgemäß dadurch gelöst, daß bei gegebener Streumenge und Arbeitsbreite die Rückstellung und die Länge der Wurfflügel um so größer ist und ferner der die Relativlage zwischen Auslauföffnung und Schleuderscheibe bestimmende Aufgabepunkt um so mehr entgegen der Drehrichtung der Schleuderscheibe und/oder nach außen verlagerbar ist, je unregelmäßiger die Kornform und/oder je kleiner die Korngröße des Düngers ist.

Bei dem erfindungsgemäß ausgebildeten Schleuderstreuer werden die düngerspezifischen Einflußfaktoren durch eine Kombination von Maßnahmen einerseits hinsichtlich Form und Anordnung der Wurfflügel auf der Schleuderscheibe, andererseits hinsichtlich der Relativlage der Schleuderscheibe bzw. der Wurfflügel zu den Auslauföffnungen eliminiert. Die Erfindung geht von der Erkenntnis aus, daß die Abwurfverhältnisse an dem einzelnen Wurfflügel das Streubild wesentlich stärker beeinflußen als das Flugverhalten des Korns auf dem Weg zum Boden. Der Erfindung liegt weiterhin die Erkenntnis zugrunde, daß bei gleicher Durchsatzmenge im Wurfflügel ein rauhes Korn ein anderes Abflugverhalten zeigt als ein glattes Korn gleichen Volumens. Ferner ändert sich das Abflugverhalten auch mit der Korngröße, wenn auch dessen Einfluß auf das Streubild geringer ist als der der Kornform. Bei gegebener Durchsatzmenge verhält sich ein Dünger mit unregelmäßigem Korn und großer Korngröße ähnlich wie ein Dünger mit glattem, jedoch kleiner Korngröße. Das Abflugverhalten ist offensichtlich von der inneren Reibung der Düngerschicht, die sich im Wurfflügel nach außen ausbreitet, abhängig. Diesem unterschiedlichen Abflugverhalten wird erfindungsgemäß dadurch Rechnung getragen, daß für einen Dünger mit unregelmäßigem Korn die Wurfflügel stärker zurückgestellt und länger ausgebildet werden als bei einem Dünger mit glattem Korn. Diese Maßnahmen am Wurfflügel werden weiterhin unterstützt durch die Verlagerung des Aufgabepunktes des Düngers auf der Schleuderscheibe. Die Aufgabe erfolgt um so früher, je unregelmäßiger die Kornform des Düngers ist. Eine Optimierung ist dann möglich, wenn Rückstellung und Länge der Wurfflügel und die Lage des Aufgabepunktes in der gleichen Weise gewählt werden, je kleiner die Korngröße des Düngers ist.

Praktische Versuche haben gezeigt, daß bei Befolgung der erfindungsgemäßen Lehre für alle Düngersorten ein dreieckförmiges Streubild erzielt werden kann.

Die erfindungsgemäß erzielte Wirkung kann noch dadurch verbessert werden, daß der Aufgabepunkt mit der Verlagerung entgegen der Drehrichtung gleichzeitig auf der Schleuderscheibe nach außen verlagerbar ist.

Bei den bekannten Schleuderstreuern ist die Drehzahl der Schleuderscheiben veränderbar, um insbesondere die mit der Streumenge sich ändernde effektive Arbeitsbreite konstant zu halten bzw. um eine andere Arbeitsbreite einzustellen. Um für jede Düngersorte das ideale dreieckförmige, flache Streubild bei einer bestimmten Arbeitsbreite zu erhalten, kann es weiterhin vorteilhaft sein, die Drehzahl zu erhöhen je unregelmäßiger das Korn und/oder je kleiner die Korngröße ist. Die Erfindung nutzt also die Möglichkeit der Drehzahlveränderung für einen anderen Zweck.

In einer für die Mehrzahl der Praxisfälle ausreichenden, vereinfachten Ausführungsform ist vorgesehen, daß für sämtliche Düngersorten zwei Paar von auswechselbaren Schleuderscheiben vorgesehen ist, und daß die Schleuderscheiben des einen Paars Wurfflügel mit starker Rückstellung und großer Länge und die des anderen Paars Wurfflügel mit schwacher Rückstellung und kleiner Länge aufweisen, und daß der Aufgabepunkt zwischen einer Position bei Anbau des letztgenannten Schleuderscheibenpaars entgegen der Drehrichtung und/oder nach außen in eine Position für das erstgenannte Paar verstellbar ist.

Der Landwirt, der in seinem Betrieb in der Regel mit einer einzigen Arbeitsbreite streut, kommt mit zwei Sätzen von Schleuderscheiben für die verschiedenen Düngersorten aus, wobei die Schleuderscheiben mit kurzen Wurfflügeln und schwächerer Rückstellung für Dünger mit glattem Korn und/oder großer Korngröße bestimmt sind, während der Satz Schleuderscheiben, deren Wurfflügel länger sind und eine stärkere Rückstellung aufweisen, für Dünger mit unregelmäßiger Kornform und/oder kleiner Korngröße bestimmt sind. Dabei übergreift jeder Satz von Schleuderscheiben ein gewisses Düngerspektrum. Der Landwirt braucht also nur für den zu streuenden Dünger den entsprechenden Satz Schleuder scheiben aufsetzen und den Aufgabepunkt entsprechend ändern. Dabei muß der Aufgabepunkt in wenigstens zwei Positionen verlagerbar sein, von denen je eine Position einem Satz Schleuderscheiben zugeordnet ist. Darüber hinaus kann der Aufgabepunkt natürlich auch in Zwischenpositionen gebracht werden, um einzelnen Düngersorten innerhalb des ausgewählten Düngerspektrums noch genauer Rechnung zu tragen.

Durch die stärkere Rückstellung der Wurfflügel wird die Abfluggeschwindigkeit verringert. Dies läßt sich durch eine Verlängerung der Wurfflügel und einen entsprechend längeren Beschleunigungsweg kompensieren. Der Vergrößerung der Länge sind jedoch konstruktiv (zu beschleunigende Flügelmasse, Unwuchten, Scheibenabstand) Grenzen gesetzt. Um dennoch auf die gewünschte Arbeitsbreite bei nicht zu langen Wurfflügeln zu kommen, wird vorteilhafterweise zugleich die Drehzahl erhöht, d. h. die Scheiben für Dünger mit groberem und/oder kleinerem Korn laufen schneller um als die für den Dünger mit glattem und/oder großem Korn.

Zur Verstellung des Aufgabepunktes gibt es mehrere, teilweise bekannte Möglichkeiten, z. B. ist der Aufgabepunkt durch Verstellen des die Auslauföffnungen aufweisenden Bodens oder durch Verstellen eines zwischen der Auslauföffnung und der Schleuderscheibe angeordneten Leitorgans für den Dünger verlagerbar.

Statt dessen kann auch vorgesehen sein, daß der Aufgabepunkt durch Verstellen der Schleuderscheibe gegenüber der Auslauföffnung verlagerbar ist.

Diese Ausführungsform läßt sich besonders einfach bei hydraulisch gesondert angetriebenen und von einem Träger aufgenommenen Schleuderscheiben verwirklichen, indem die Schleuderscheiben mittels des Trägers verstellbar sind, wobei der Träger der Schleuderscheibe schwenkbar oder auch verschiebbar gelagert sein kann.

Werden die Schleuderscheiben gemeinsam von der Zapfwelle des Schleppers über eine Gelenkwelle und ein Eckgetriebe synchron angetrieben, so kann gemäß einer weiteren Ausführungsform vorgesehen sein, daß zur Verlagerung des Aufgabepunktes die Schleuderscheiben zusammen mit dem Eckgetriebe in und entgegen der Fahrtrichtung verschiebbar sind.

Wie eingangs angedeutet, hat die Verformung des Streubildes gegenüber der idealen Dreiecksform seine Ursache einerseits in düngerspezifischen Eigenschaften, andererseits stellt sie sich aber auch mit zunehmender Streumenge ein. Läßt sich das Streubild durch die erfindungsgemäße Merkmalskombination für praktisch jede Düngersorte in der idealen Dreiecksform ausbilden, so gilt dies nur bis zu einer bestimmten Streumenge bzw. im unteren Streumengenbereich. Um ferner den Mengeneffekt auszuschalten, also auch bei größeren Streumengen noch ein ideales dreieckförmiges Streubild zu erhalten, ist erfindungsgemäß weiterhin vorgesehen, daß in Umlaufrichtung der Schleuderscheibe unmittelbar vor jedem Wurfflügel wenigstens ein weiterer kürzerer Würfflügel angeordnet ist, der sich nur über einen Teil der radialen Ausdehnung des die Auslauföffnung verlassenden Streugutstrahls und von dort zum Umfang der Schleuderscheibe erstreckt.

Die erfindungsgemäße Ausbildung des Wurfflügels als Doppelflügel, von denen der in Drehrichtung vordere und kürzere Flügel nur einen Teil des Düngerstrahls durchquert, führt dazu, daß der Düngerstrahl auf zwei Flügel aufgeteilt und von den Flügeln getrennt beschleunigt wird, indem der kürzere Wurfflügel den weiter außen liegenden Teil des Streu gutstrahls erfaßt, während der nachlaufende längere Wurfflügel den restlichen Teil erfaßt und beschleunigt. Es ist zwar bekannt, statt der üblichen zwei Wurfflügel auf der Schleuderscheibe vier Wurfflügel in symmetrischer Anordnung vorzusehen, doch läßt sich damit die durch den Mengeneffekt auftretende Verformung des Streubildes allenfalls abschwächen, während sie durch die erfindungsgemäße Ausbildung weitestgehend beseitigt und dem idealen dreieckförmigen Streubild angenähert wird.

Eine vorteilhafte Ausführungsform zeichnet sich dadurch aus, daß der kürzere Wurfflügel mit dem längeren Wurfflügel derart verbunden ist, daß sie zumindest über die radiale Erstreckung des Streugutstrahls eine geschlossene Oberseite bilden.

Hierdurch werden vor allem die mit zunehmender Streumenge gleichfalls zunehmenden Prallverluste, die gleichfalls zu einer Verformung des Streubildes führen, reduziert.

Weiterhin ist von Vorteil, wenn der längere Wurfflügel um das Maß x und der kürzere Wurfflügel um das Maß y gegenüber der Drehrichtung zurückgestellt ist, wobei y ≧ x ist.

Im Rahmen der erfindungsgemäßen Merkmalskombination (Rückstellung und Länge der Wurfflügel, Lage des Aufgabepunktes) ist die Rückstellung des längeren Wurfflügels um das Maß x maßgeblich. Durch die unterschiedliche Rückstellung der beiden Flügel des Doppelflügels gehen die Streugutpartikel an den Enden der Wurfflügel unter unterschiedlichen Drehwinkeln ab und fallen in unterschiedlicher Entfernung auf den Boden, wodurch sich eine weitere Vergleichmäßigung des Streubildes ergibt.

Bei der erfindungsgemäßen Ausbildung des Doppelflügels ragen vorteilhafterweise beide Wurfflügel mit ihren äußeren Enden über den Umfang der Schleuderscheibe hinaus, wobei der Überstand des längeren Wurfflügels in der Regel größer ist als der des kürzeren.

Gemäß einer weiterhin bevorzugten Ausführungsform ist vorgesehen, daß die Wurfflügel an ihrem äußeren Ende zumindest über einen Teil ihrer Höhe von oben nach außen abgeschrägt sind.

Es hat sich gezeigt, daß durch die Abschrägung der Wurfflügel eine weitere positive Beeinflussung des Mengeneffektes möglich ist. Die Ursache dürfte in folgender Überlegung zu suchen sein: Bei kleinen Streumengen wandert das Streugut vornehmlich im unteren Bereich des Wurfflügels nach außen und steigt mit zunehmender Menge im Wurfflügel nach oben. Zugleich füllt sich der Wurfflügel stärker, d. h. innerhalb des Wurfflügels bewegt sich der Dünger in mehreren übereinander liegenden Schichten, wobei die Partikel in den einzelnen Schichten unterschiedlich beschleunigt werden, nämlich die an der rückwärtigen Wand des Wurfflügels liegende Partikel stärker als die mit Abstand davon angeordneten. Durch die Abschrägung des Wurfflügels verlassen die sich oben bewegenden Partikel den Wurfflügel früher als die weiter unten bewegten Partikel, so daß sie auf geringere Wurfweite als letztere kommen, insgesamt also wiederum eine Vergleichmäßigung der Streumenge über die Streubreite erreicht wird.

Sind die Wurfflügel, wie üblich, aus einem sich in Umlaufrichtung öffnenden U-Profil gebildet, so ist es vorteilhaft, wenn auch der kürzere Wurfflügel aus einem U-Profil gebildet ist und der obere Schenkei des kürzeren Wurfflügels zumindest über die gesamte radiale Erstreckung des Streugutstrahls an den oberen Schenkel des längeren Wurfflügels anschließt, wodurch eine geschlossene Oberseite des Wurfflügels zumindest in dem Bereich, der in den Streugutstrahl eintaucht, gewährleistet ist und dadurch die Prallverluste minimiert werden.

Gemäß einem weiteren vorteilhaften Ausführungsbeispiel ist vorgesehen, daß der Steg des U-Profils des kürzeren Wurfflügels an seinem inneren Ende in Drehrichtung nach vorne gebogen ist.

Durch diese Maßnahme wird vermieden, daß die beim Eintreten des kürzeren Wurfflügels in den Düngerstrahl auf die Partikel wirkenden Impulskräfte einen Teil der Partikel nach innen beschleunigen, die dann entweder in die Prallverluste eingehen oder erst von dem nachlaufenden längeren Flügel erfaßt werden. Es wird also von dem kürzeren Wurfflügel der ihm zugedachte Teil des Düngerstrahls von der vorlaufenden Kante des oberen Schenkels einerseits und von dem nach vorne gebogenen inneren Ende des Stegs andererseits gleichsam herausgeschält und nur nach außen beschleunigt.

Ist die Auslauföffnung am Boden des Vorratsbehälters zu einem schachtartigen Auslauf verlängert, wie dies bei bekannten Schleuderstreuern üblich ist, so ist es weiterhin von Vorteil, wenn zumindest die vorlaufende Kante des längeren und des kürzeren Wurfflügels zumindest im Bereich der radialen Erstreckung des Auslaufs wenig niedriger als der Auslauf angeordnet ist. Auch dadurch werden die Prallverluste weiterhin reduziert.

Dem gleichen Ziel dient die Maßnahme, daß der obere Schenkel des längeren und des kürzeren Wurfflügels zumindest im Bereich der radialen Erstreckung des Auslaufs von der vorlaufenden Kante nach hinten und unten schwach geneigt ist.

Nachstehend ist die Erfindung anhand eines in der Zeichnung wiedergegebenen Ausführungsbeispiels beschrieben. In der Zeichnung zeigen:

Figur 1 eine schematische Teilansicht eines Zweischeiben-Schleuderstreuers;

Figur 2 ein Streubild-Diagramm;

Figur 3 eine schematische Draufsicht auf eine erste Ausführungsform der Scheibenanordnung mit Aufgabepunkt-Verstellung;

Figur 4 eine abgewandelte Ausführungsform mit Aufgabepunkte-Verstellung;

Figur 5 eine Draufsicht auf eine Schleuderscheibe für eine gut fließfähige Düngersorte;

Figur 6 eine Draufsicht auf eine Schleuderscheibe für eine Düngersorte mit hoher innerer Reibung;

Figur 7 eine Draufsicht auf eine andere Ausführungsform für eine gut fließende Düngersorte;

Figur 8 eine Draufsicht auf die Ausführungsform gemäß Figur 7 in der Ausbildung für einen Dünger mit hoher innerer Reibung und

Figur 9 eine schematische Draufsicht auf eine Schleuderscheibe mit darauf projizierter Auslauföffnung.

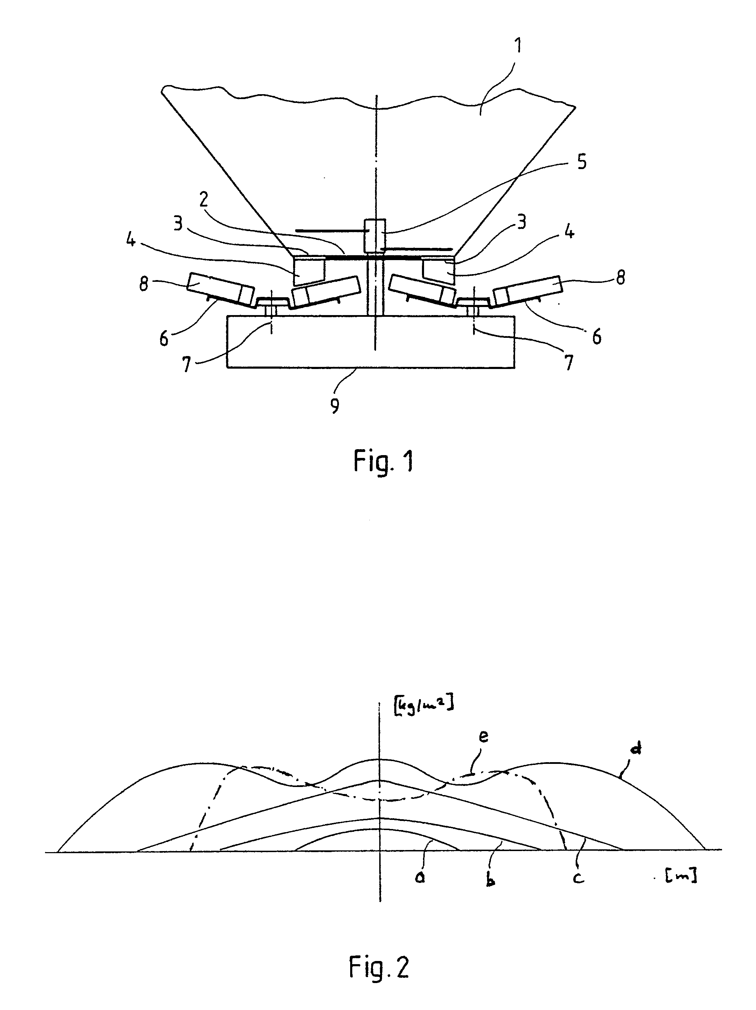

Der in Figur 1 schematisch und ausschnittsweise wiedergegebene Schleuderstreuer weist einen trichterförmigen Vorratsbehälter 1 mit einem Boden 2, darin angeordnete Auslauföffnungen 3 und daran anschließende, die Auslauföffnungen nach unten verlängernde Auslaufschächte 4 auf. Innerhalb des Vorratsbehälters 1 ist ein den Dünger rieselfähig haltender Rührer 5 angeordnet. Unterhalb des Bodens 2 des Vorratsbehälters 1 ist unter jedem Auslaufschacht 4 eine Schleuderscheibe 6 angeordnet, deren Drehachse gegenüber dem Auslaufschacht 4 jeweils nach außen versetzt ist. Jede Schleuderscheibe weist zwei Wurfflügel 8 auf, die sich vom Zentrum der Schleuderscheibe nach außen erstrecken. Die Schleuderscheiben 6 und der Rührer 5 werden beim gezeigten Ausführungsbeispiel von der Zapfwelle eines Schleppers über ein Eckgetriebe angetrieben, das in dem schematisch wiedergegebenen Getriebegehäuse 9 untergebracht ist.

Die Schleuderscheiben 6 sind bei dem gezeigten Ausführungsbeispiel tellerförmig nach oben ansteigend ausgebildet, so daß auch die Wurfflügel 8 entsprechend geneigt nach oben verlaufen.

Ein von einem Schleuderstreuer gemäß Figur 1 erzeugtes typisches Streubild für mehrere Arbeitsbreiten ist in dem Diagramm gemäß Figur 2 wiedergegeben, in welchem die Streudichte (Gewicht pro Fläche) über der tatsächlichen Streubreite aufgetragen ist. Es sind vier charakteristische Streubilder für vier verschiedene Streumengen a , b , c und d gezeigt, wobei a < b < c < d ist. Die Ordinate fällt mit der Längsachse des Schleppers bzw. der Fahrtrichtung zu sammen. Aus Figur 2 ist ersichtlich, daß bei kleineren Streumengen die Streudichte von einem Maximum hinter dem Schlepper stetig nach außen abfällt, wobei die Streubilder b und c ideal dreieckförmig sind, so daß beim Anschlußfahren durch entsprechendes Überlappen sich die Streumengen zu gleichen Werten aufaddieren. Je größer die Streumenge wird, um so größer wird die Höhe des dreieckförmigen Streubildes. Ab einer gewissen Streumenge bildet sich ein Streubild aus, wie es anhand der Kurve d für die größte Streumenge gezeigt ist. Die Kurve weist neben einer mittigen Überhöhung nach außen hin je eine Senke und daran anschließend wiederum Überhöhungen auf, von denen dann die Streudichte wesentlich steiler abfällt. Bei diesem Streubild ist durch das Überlappen beim Anschlußfahren keine einwandfreie Kompensierung mehr möglich.

Während die mittlere Überhöhung fast ausschließlich durch den sogenannten Pralleffekt bzw. durch die Prallverluste entsteht, d. h. durch jene Düngerpartikel, die von den Wurfflügeln 8 in nicht kontrollierter Weise erfaßt und vor allem reflektiert werden und sich vornehmlich in der Mitte ablagern, entstehen die beiden seitlichen Überhöhungen durch den sogenannten Mengeneffekt und sind vornehmlich auf strömungstechnische Vorgänge im Wurfflügel zurückzuführen. Auch mit zunehmender Arbeitsbreite nehmen die Prallverluste aufgrund des notwendigerweise größeren Mengendurchsatzes zu, wie auch der Mengeneffekt stärker wird.

Aber auch schon bei kleiner Arbeitsbreite zeigen sich Unregelmäßigkeiten im Streubild, die in Abhängigkeit von der Düngersorte variieren. So ist in Figur 2 mit strichpunktierter Linie ein Streubild e wiedergegeben, das bei einer Maschineneinstellung auf eine Streubreite entsprechend dem Streubild c entsteht. Während das Streubild c für eine Düngersorte mit gleichförmigen Korn und rela tiv großer Korngröße entsteht, wird das Streubild e bei einer Düngersorte mit unregelmäßigem Korn oder sehr kleiner Korngröße erhalten. Auch hier zeigen sich - wie beim Mengeneffekt - beiderseits der Fahrtrichtung starke Überhöhungen und nach außen hin steiler abfallende Flanken mit der Folge, daß sich auch die effektive Arbeitsbreite verändert. Auch hier ist eine einwandfreie Kompensation der Überhöhungen bzw. des dazwischen liegenden "Tals" durch das Anschlußfahren allein nicht möglich. Es entsteht ein Wellenprofil mit etwas geringerer Welligkeit als das einzelne Streubild e .

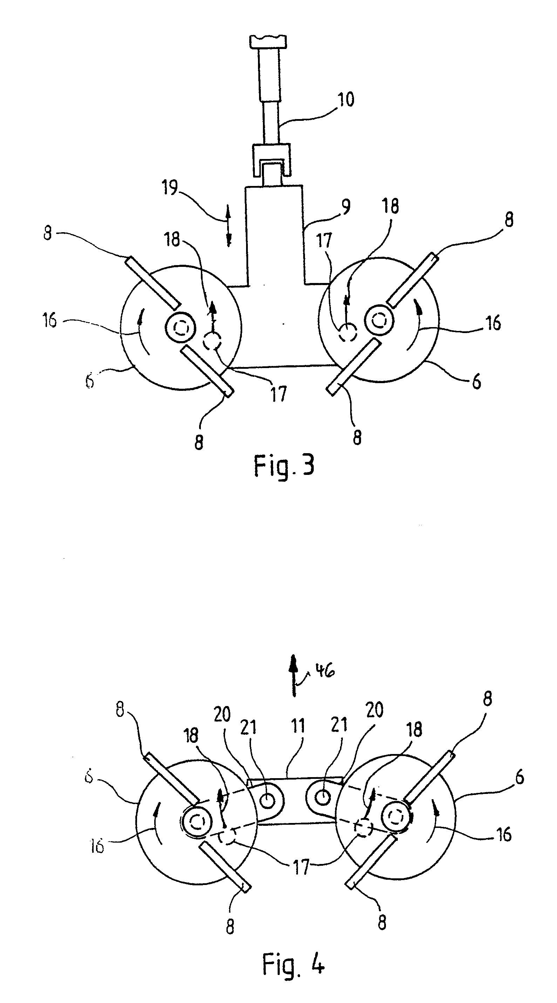

Um bei einer gegebenen Arbeitsbreite und gegebener Streumenge das Streubild e dem Streubild c anzunähern, sind verschiedene Maßnahmen in Kombination miteinander vorgesehen. In den Figuren 3 und 4 sind zwei Ausführungsformen für eine erste Maßnahme gezeigt. Bei der Ausführungsform gemäß Figur 3, die eine Draufsicht auf die Schleuderscheiben-Anordnung gemäß Figur 1 zeigt, bei der also die Schleuderscheiben 6 über ein Eckgetriebe und eine Gelenkwelle 10 von der Zapfwelle des Schleppers angetrieben sind, laufen die Schleuderscheiben entsprechend den angedeuteten Richtungspfeilen 16 von außen nach innen um. Es ist ferner der unterhalb der Auslauföffnung 3 bzw. des Auslaufschachtes 4 (Figur 1) liegende Aufgabepunkt 17 mit gestrichelten Linien angedeutet. Dieser Aufgabepunkt wird entsprechend dem Richtungspfeil 18, also entgegen der Drehrichtung 16 verlagert, je unregelmäßiger die Kornform und je kleiner die Korngröße ist. Statt dessen oder zusätzlich zu dieser Maßnahme kann der Aufgabepunkt gegebenenfalls auch noch gleichzeitig auf der Scheibe nach außen wandern. Diese Verlagerung des Aufgabepunktes ist bei der Ausführungsform gemäß Figur 3 dadurch möglich, daß das Getriebegehäuse 19 in dem Maschinenrahmen verschiebbar gelagert ist, so daß er entsprechend dem Doppelpfeil 19 bewegt werden kann, wobei die Gelenkwelle 10 das notwendige Bewegungsspiel bietet.

Bei dem Ausführungsbeispiel gemäß Figur 4 sind die Schleuderscheiben 6 von einem nichtstarren Antrieb, z. B. einem Kettentrieb, oder gesondert über Hydromotoren angetrieben. Jede Schleuderscheibe 6 sitzt auf einem Träger 20 in Form eines Schwenkarms, der bei 21 an einem Teil 11 des Rahmens des Schleuderstreuers gelagert ist. Auch hier kann der Aufgabepunkt 17 durch Schwenken der Träger 20 entgegen der Drehrichtung 16, nämlich in Richtung 18 verlagert werden. Das Ausmaß der Verlagerung entgegen der Drehrichtung ist um so größer, je unregelmäßiger die Kornform und je kleiner die Korngröße der eingesetzten Düngersorte ist.

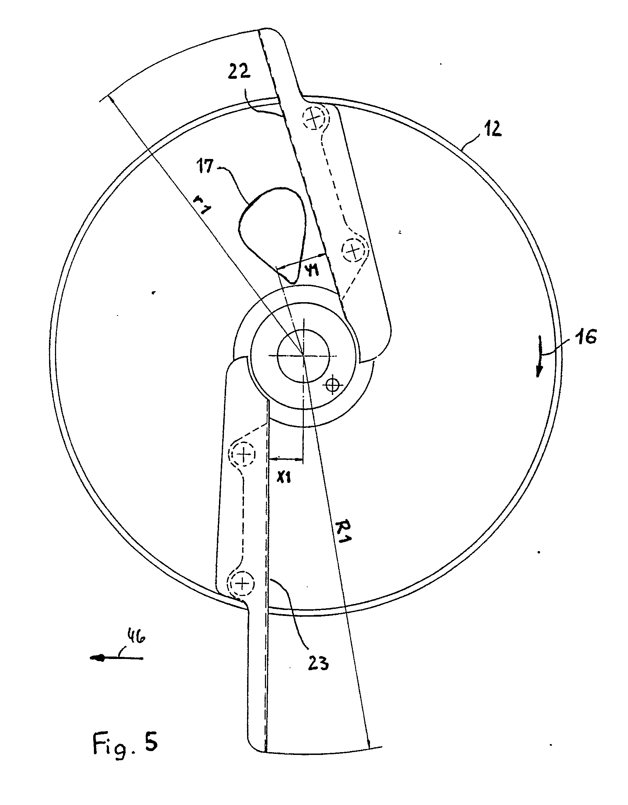

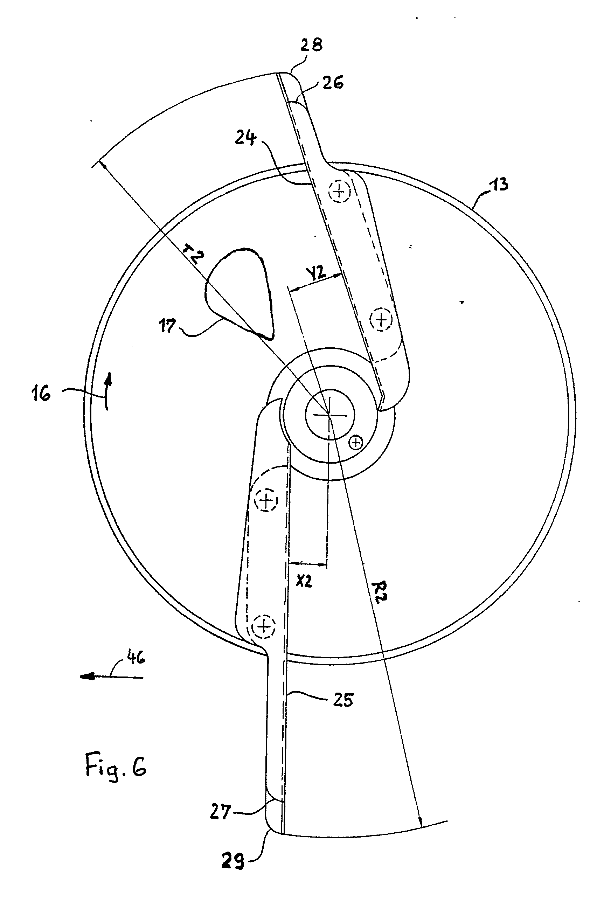

Die Figuren 5 und 6 verdeutlichen die beiden weiteren Maßnahmen an der Schleuderscheibe zur Reduzierung der ungünstigen Einflüsse, die sich beim Verteilen verschiedener Düngersorten ergeben. Figur 5 zeigt eine Schleuderscheibe 12 für einen gut fließenden Dünger, also vornehmlich einem solchen mit glatter Kornform, z. B. Kalkammonsalpeter. Die Schleuderscheibe 12 weist zwei Wurfschaufeln 22, 23 auf, die eine unterschiedliche Länge aufweisen, wie dies bei herkömmlichen Schleuderstreuern bekannt ist. Maßgeblich ist dabei weniger die absolute Länge des Wurfflügels, sondern seine "radiale" Länge, d. h. der auf einer Radialen gemessene Abstand seines äußeren Endes vom Zentrum der Schleuderscheibe, da hierdurch der Abwurfpunkt des Düngers und seine dort vorhandene Zentrifugalgeschwindigkeit bestimmt sind. Bei der Ausführungsform gemäß Figur 5 weist der kürzere Wurfflügel 22 eine radiale Länge r1 und der längere Wurfflügel 23 eine "radiale" Länge R1 auf, wobei r1 < R1 ist.

Ferner sind die Wurfflügel 22, 23, wie gleichfalls bekannt, gegenüber der Radialen in Drehrichtung 16 parallel verscho ben auf der Scheibe befestigt. Dieser Versatz in Drehrichtung wird als Rückstellung bezeichnet, während ein Versatz gegenüber dem Zentrum der Scheibe entgegen der Drehrichtung als Vorstellung bezeichnet wird. Die Rückstellung des kürzeren Wurfflügels 22 ist mit Y1, die des längeren Wurfflügels 23 mit X1 bezeichnet, wobei Y1 > X1 ist.

Die Schleuderscheibe 12 mit den Wurfflügeln 22, 23 dient, wie bereits gesagt, zum Verteilen einer gut fließenden Düngersorte, also eines Düngers mit geringer innerer Reibung. Für diese Düngersorte weist der Aufgabepunkt 17 auf der Schleuderscheibe 12 eine definierte Lage auf.

Figur 6 zeigt eine Ausführungsform der Schleuderscheibe 13 für einen Dünger mit hoher innerer Reibung, z. B. Kali, oder einen anderen Mineraldünger. Die Schleuderscheibe 13 weist Wurfflügel 24, 25 auf, die zwar unterschiedlich lang, jedoch jeweils länger sind als die entsprechenden Wurfflügel der Schleuderscheibe 12, d. h. r2 > r1 und/oder R2 > R1. Ferner sind die Flügel 24, 25 gegenüber den Flügeln 22, 23 stärker zurückgestellt, d. h. Y2 > Y1 und/oder X2 > X1.

Es sind ferner bei dieser Ausführungsform die Enden der Wurfflügel nach außen und unten abgeschrägt, so daß der jeweils obere Schenkel 26, 27 des in Drehrichtung offenen U-Profils jedes Wurfflügels 24, 25 kürzer ist als der jeweils untere Schenkel 28, 29.

Bei Einsatz der Schleuderscheibe für eine Düngersorte hoher innerer Reibung wird der Aufgabepunkt 17 in der in den Figuren 3 und 4 gezeigten oder aber in einer anderen bekannten Weise (Verstellung des Auslaufs, Anordnung verstellbarer Leitorgane zwischen Auslauf und Schleuderscheibe) entgegen der Drehrichtung 16 und nach außen verlagert, wie dies aus einem Vergleich der Figuren 5 und 6 ersichtlich ist.

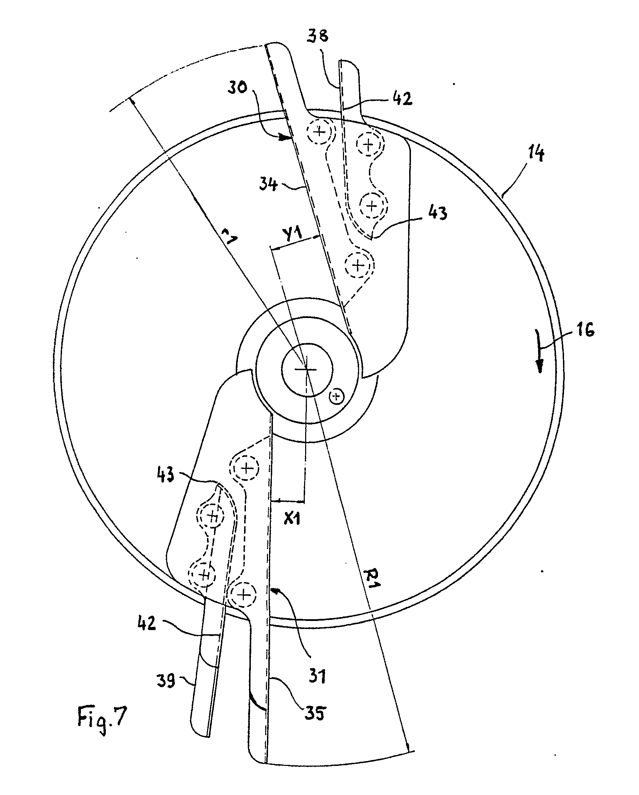

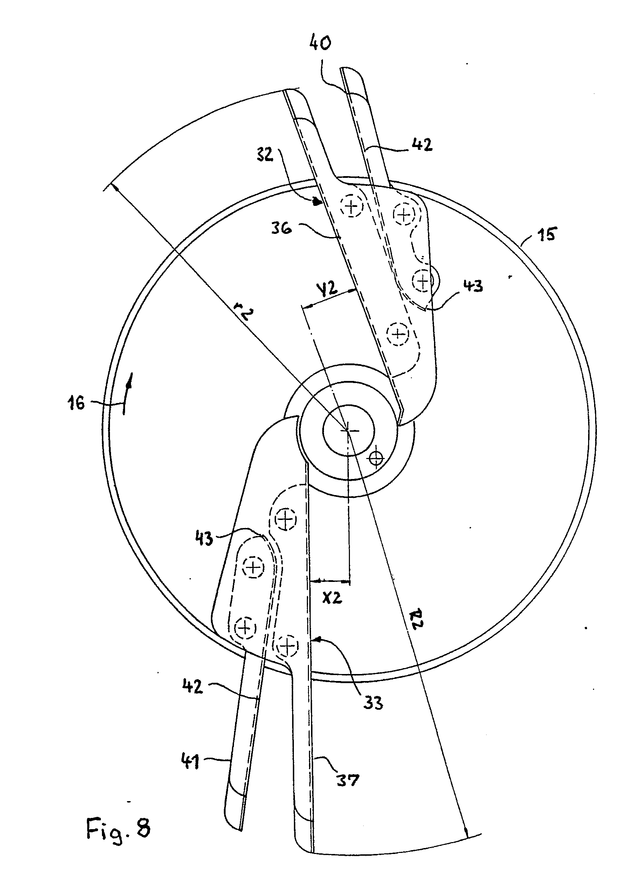

In den Figuren 7 und 8 sind zwei Ausführungsbeispiele gezeigt, die neben düngerspezifischen Einflußfaktoren auf das Streubild auch den Mengeneffekt beseitigen bzw. in seinen nachteiligen Wirkungen reduzieren. Dabei zeigt Figur 7 eine Schleuderscheibe 14 für einen wiederum gut fließenden Dünger mit geringer innerer Reibung, während Figur 8 eine Schleuderscheibe 15 für einen Dünger mit hoher innerer Reibung zeigt.

Die Wurfflügel 30, 31 der Schleuderscheibe 14 weisen wiederum eine "radiale" Länge r1 bzw. R1 und eine Rückstellung Y1 bzw. X1 auf, die entsprechend der Düngersorte ausgewählt sind. Hingegen weisen die Wurfflügel 32, 33 bei der Schleuderscheibe 15 eine größere "radiale" Länge r2 bzw. R2 und eine stärkere Rückstellung Y2 bzw. X2 auf, die wiederum an eine Düngersorte mit hoher innerer Reibung angepaßt ist. Es ist also $r2 > r1$, $R2 > R1$, $Y2 > Y1$ und $X2 > X1$. Des weiteren weist der hier nicht gezeigte Aufgabepunkt auf der Schleuderscheibe 14 die gleiche Lage auf wie auf der Schleuderscheibe 12 und auf der Schleuderscheibe 15 die gleiche Lage wie auf der Schleuderscheibe 13.

Die Wurfflügel 30, 31, 32 und 33 sind als Doppelflügel ausgebildet. Sie weisen einen sich über die "radiale" Länge erstreckenden - in Drehrichtung gesehen - hinteren Wurfflügel 34, 35 bzw. 36, 37 und einen jeweils in Drehrichtung nach vorne versetzten Wurfflügel 38, 39 bzw. 40, 41 auf. Der kürzere Wurfflügel weist nicht nur eine kürzere "radiale" Länge auf, sondern setzt mit großem Abstand vom Zentrum der Schleuderscheibe an, und zwar derart, daß er mit seinem Steg 42 nur einen äußeren Teil des aus dem Auslauf austretenden Düngerstrahls erfaßt, während der jeweils hintere Wurfflügel 34, 35 bzw. 36, 37 den restlichen Teil des Düngerstrahls mitnimmt. Die gesamte Durchsatzmenge wird also mittels der Wurfflügel 30, 31 bzw. 32, 33 aufgeteilt und in zwei Teilmengen nach außen beschleunigt.

Um die Prallverluste, die sich insbesondere bei großen Streumengen nachteilig auswirken (mittlere Überhöhung in Figur 2) so gering als möglich zu halten, laufen einerseits die Wurfflügel, wie aus Figur 1 erkennbar, mit ihrem oberen Schenkel unmittelbar unterhalb der unteren Kante des Auslaufschachtes 4 vorbei und weisen die beiden Wurfflügel 34, 38 und 35, 39 (Figur 7) bzw. 36, 40 und 37, 41 (Figur 8) einen gemeinsamen oberen Schenkel auf, so daß nur eine einzige vorlaufende Kante jeweils in den Düngerstrahl eintaucht. Dem gleichen Zweck dient die Maßnahme, daß die innen liegende Kante 43 des Stegs 42 des kürzeren Flügels 38, 39 bzw. 40, 41 in Drehrichtung nach vorne gezogen ist.

Bei dem Ausführungsbeispiel gemäß Figur 7 sind die oberen Schenkel bei den beiden den Wurfflügel 31 bildenden Flügeln 35, 39 sowie beim Ausführungsbeispiel nach Figur 8 sämtliche die Wurfflügel 32, 33 bildenden Flügel 36, 37 und 40, 41 an ihren äußeren Enden abgeschrägt, wie dies bereits mit Bezug auf Figur 6 erläutert worden ist.

Wie ein Vergleich der Darstellung in den Figuren 5 und 6 zeigt, wird der Aufgabepunkt für einen Dünger hoher innerer Reibung (Dünger mit unregelmäßiger Kornform und/oder kleiner Korngröße) nicht nur entgegen der Drehrichtung, sondern zugleich auch nach außen verlagert (siehe Figur 6 gegenüber Figur 5). Hiermit wird insbesondere dem nachteiligen Mengeneffekt entgegengewirkt. Die Darstellung der Verlagerung des Aufgabepunktes nach außen ist gegenüber den tatsächlichen Verhältnissen zur besseren Verdeutlichung etwas übertrieben wiedergegeben.

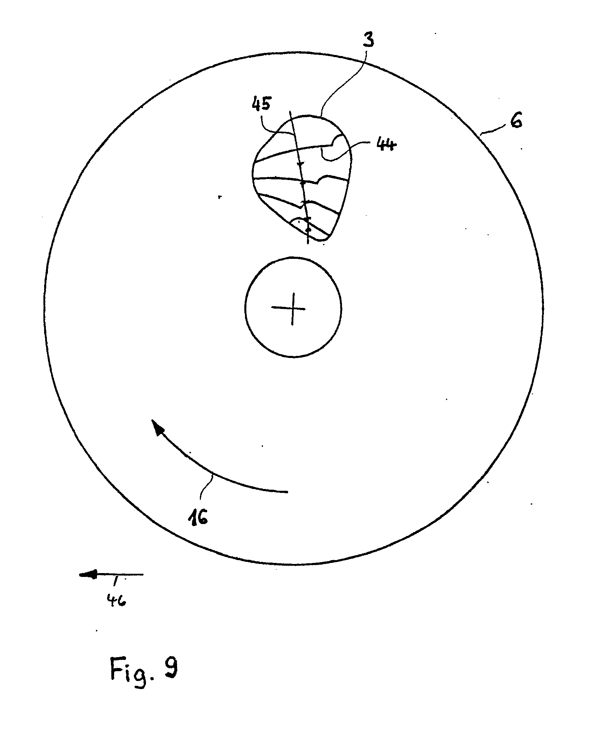

Dem gleichen Zweck dient das in Figur 9 wiedergegebene Ausführungsbeispiel, wobei die Zeichnung nur die tellerförmige Schleuderscheibe 6 ohne die Wurfflügel zeigt. Ferner ist die auf die Schleuderscheibe projizierte Kontur der Auslauföffnung 3 und die Kante 44 des Einstellschiebers in verschiedenen Positionen für unterschiedliche Durchsatz-bzw. Streumengen dargestellt. Die Kante 44 des Einstellschiebers bewegt sich von kleinen zu großen Streumengen auf der Schleuderscheibe 6 von innen nach außen. Der Flächenschwerpunkt des jeweils freien Querschnittes wandert dabei auf der Linie 45 nach außen und zugleich entgegen der Drehrichtung.

Wie aus den Figuren 7 und 8 ersichtlich, ist die für die Düngersorte maßgebliche Rückstellung X, Y des Wurfflügels 30, 31 bzw. 32, 33 die Rückstellung jeweils des längeren Flügels 34, 35 bzw. 36, 37, demgegenüber der kürzere Flügel 38, 39 bzw. 40, 41 in der Regel noch stärker zurückgestellt ist.

In den Figuren 4, 5, 6 und 9 ist die Fahrtrichtung des Schleppers jeweils mit dem Richtungspfeil 46 angedeutet.

## Ansprüche

1. Schleuderstreuer für rieselfähigen Dünger verschiedener Kornform und Korngröße mit einem den Dünger enthaltenden Vorratsbehälter (1), dessen Boden (2) zwei einstellbare Auslauföffnungen (3) aufweist, und mit darunter umlaufenden Schleuderscheiben (6) mit wenigstens zwei Wurfflügeln, die auf der Schleuderscheibe parallel zur Radialen in Drehrichtung versetzt angeordnet - zurückgestellt - sind, wobei bei gegebener Streumenge und Arbeitsbreite die Rückstellung (X, Y) und die Länge (r, R) der Wurfflügel (22, 23 bzw. 24, 25) um so größer ist und ferner der die Relativlage zwischen Auslauföffnung (3) und Schleuderscheibe (13 bzw. 14) bestimmende Aufgabepunkt (17) um so mehr entgegen der Drehrichtung (16) der Schleuderscheibe und/oder nach außen verlagerbar ist, je unregelmäßiger die Kornform und/oder je kleiner die Korngröße des Düngers ist.

2. Schleuderstreuer nach Anspruch 1, dadurch gekennzeichnet, daß der Aufgabepunkt (17) mit der Verlagerung entgegen der Drehrichtung (16) gleichzeitig auf der Schleuderscheibe (13 bzw. 14) nach außen verlagerbar ist.

3. Schleuderstreuer nach Anspruch 1 oder 2, bei denen die Drehzahl der Schleuderscheiben veränderbar ist, dadurch gekennzeichnet, daß die Drehzahl der Schleuderscheiben (6) um so höher ist, je unregelmäßiger die Kornform und/oder je kleiner die Korngröße ist.

4. Schleuderstreuer nach Anspruch 1 oder 2, dadurch gekennzeichnet, daß für sämtliche Düngersorten zwei Paar von auswechselbaren Schleuderscheiben (12 bzw. 13) vorgesehen ist, und daß die Schleuderscheiben (13) des einen Paars Wurfflügel (24, 25) mit starker Rückstellung (X3, Y2) und großer Länge (r2, R2) und die (12) des anderen Paars Wurfflügel (22, 23) mit schwacher Rückstellung (X1, Y1) und kleiner Länge (r1, R1) aufweisen, und daß der Aufgabepunkt (17) zwischen einer Position bei Anbau des letztgenannten Schleuderscheibenpaars entgegen der Drehrichtung (16) und/oder nach außen in eine Position für das erstgenannte Paar verstellbar ist.

5. Schleuderstreuer nach einem der Ansprüche 1 bis 3, dadurch gekennzeichnet, daß für sämtliche Düngersorten zwei Paar von auswechselbaren Schleuderscheiben (12 bzw. 13) vorgesehen ist, und daß die Schleuderscheiben (13) des einen Paars Wurfflügel (24, 25) mit starker Rückstellung (X3, Y2) und großer Länge (r2, R2) und die (12) des anderen Paars Wurfflügel (22, 23) mit schwacher Rückstellung (X1, Y1) und kleiner Länge (r1, R1) aufweisen, und daß der Auf gabepunkt (17) zwischen einer Position bei Anbau des letztgenannten Schleuderscheibenpaars entgegen der Drehrichtung (16) und/oder nach außen in eine Position für das erstgenannte Paar unter gleichzeitiger Erhöhung der Drehzahl verstellbar ist.

6. Schleuderstreuer nach einem der Ansprüche 1 bis 5, dadurch gekennzeichnet, daß der Aufgabepunkt (17) durch Verstellen des die Auslauföffnungen (3) aufweisenden Bodens (2) verlagerbar ist.

7. Schleuderstreuer nach einem der Ansprüche 1 bis 6, dadurch gekennzeichnet, daß der Aufgabepunkt (17) durch Verstellen eines zwischen der Auslauföffnung (3) und der Schleuderscheiben (6) angeordneten Leitorgans für den Dünger verlagerbar ist.

8. Schleuderstreuer nach einem der Ansprüche 1 bis 7, dadurch gekennzeichnet, daß der Aufgabepunkt (17) durch Verstellen der Schleuderscheibe (12, 13) gegenüber der Auslauföffnung (3) verlagerbar ist.

9. Schleuderstreuer nach Anspruch 8 mit hydraulisch gesondert angetriebenen und von einem Träger aufgenommenen Schleuderscheiben, dadurch gekennzeichnet, daß die Schleuderscheiben (6) mittels des Trägers (20) verstellbar sind.

10. Schleuderstreuer nach Anspruch 8 oder 9, dadurch gekennzeichnet, daß der Träger (20) der Schleuderscheibe (6) schwenkbar gelagert ist.

11. Schleuderstreuer nach Anspruch 8 oder 9, dadurch gekennzeichnet, daß der Träger (20) der Schleuderscheibe (6) verschiebbar gelagert ist.

12. Schleuderstreuer nach Anspruch 8, bei dem die Schleuderscheiben von der Zapfwelle des Schleppers über eine Gelenkwelle und ein Eckgetriebe synchron angetrieben sind, dadurch gekennzeichnet, daß zur Verlagerung des Aufgabepunktes die Schleuderscheiben zusammen mit dem Eckgetriebe in und entgegen der Fahrtrichtung verschiebbar sind.

13. Schleuderstreuer nach einem der Ansprüche 1 bis 12 mit Auslauföffnungen, deren freier Querschnitt mittels eines schieber- oder blendenartigen Verschlusses einstellbar ist, dadurch gekennzeichnet, daß die Form der Auslauföffnung (3) und die einen Teil des freien Querschnittes begrenzende Kante (44) des Verschlusses so ausgebildet und/oder diese Kante so über die Auslauföffnung bewegbar ist, daß der Flächenschwerpunkt mit zunehmender Größe des freien Querschnitts nach außen und/oder entgegen der Drehrichtung (16) wandert.

14. Schleuderstreuer nach einem der Ansprüche 1 bis 13, dadurch gekennzeichnet, daß in Umlaufrichtung der Schleuderscheibe (6) unmittelbar vor jedem Wurfflügel (34, 35 bzw. 36, 37) wenigstens ein weiterer kürzerer Würfflügel (38, 39 bzw. 40, 41) angeordnet ist, der sich nur über einen Teil der radialen Ausdehnung des die Auslauföffnung (3) verlassenden Streugutstrahls und von dort zum Umfang der Schleuderscheibe (15, 16) erstreckt.

15. Schleuderstreuer nach einem der Ansprüche 1 bis 14, dadurch gekennzeichnet, daß der kürzere Wurfflügel (38, 39 bzw. 40, 41) mit dem längeren Wurfflügel (34, 35 bzw. 36, 37) derart verbunden ist, daß sie zumindest über die radiale Erstreckung des Streugutstrahls eine geschlossene Oberseite bilden.

16. Schleuderstreuer nach einem der Ansprüche 1 bis 15, dadurch gekennzeichnet, daß der längere Wurfflügel (34, 35) um das Maß x und der kürzere Wurfflügel (38, 39 bzw. 40, 41) um das Maß y gegenüber der Drehrichtung (16) zurückgestellt ist, wobei $y \geqq x$ ist.

17. Schleuderstreuer nach einem der Ansprüche 1 bis 16, dadurch gekennzeichnet, daß zumindest der längere Wurfflügel (34, 35 bzw. 36, 37) mit seinem äußeren Ende über den Umfang der Schleuderscheibe (14, 15) hinausragt.

18. Schleuderstreuer nach einem der Ansprüche 1 bis 17, dadurch gekennzeichnet, daß beide Wurfflügel (34, 38; 35, 39 bzw. 36, 37; 40, 41) mit ihren äußeren Enden über den Umfang der Schleuderscheibe (14, 15) hinausragen, wobei der Überstand des längeren Wurfflügels größer ist als der des kürzeren.

19. Schleuderstreuer nach einem der Ansprüche 1 bis 18, dadurch gekennzeichnet, daß die Wurfflügel (24, 25) an ihrem äußeren Ende zumindest über einen Teil ihrer Höhe von oben nach außen abgeschrägt sind.

20. Schleuderstreuer nach einem der Ansprüche 1 bis 19, wobei die Wurfflügel aus einem sich in Umlaufrichtung öffnenden U-Profil gebildet sind, dadurch gekennzeich net, daß auch der kürzere Wurfflügel (38, 39 bzw. 40, 41) aus einem U-Profil gebildet ist, und daß der obere Schenkel des kürzeren Wurfflügels zumindest über die gesamte radiale Erstreckung des Streugutstrahls an den oberen Schenkel des längeren Wurfflügels (34, 35 bzw. 36, 37) anschließt.

21. Schleuderstreuer nach einem der Ansprüche 1 bis 20, dadurch gekennzeichnet, daß der Steg (42) des U-Profils des kürzeren Wurfflügels (38, 39 bzw. 40, 41) an seinem inneren Ende (43) in Drehrichtung nach vorne gebogen ist.

22. Schleuderstreuer nach einem der Ansprüche 1 bis 21, dadurch gekennzeichnet, daß zumindest die vorlaufende Kante des längeren (34, 35 bzw. 36, 37) und des kürzeren Wurfflügels (38, 39 bzw. 40, 41) zumindest im Bereich der radialen Erstreckung des Auslaufs (4) wenig niedriger als der Auslauf angeordnet ist.

23. Schleuderstreuer nach einem der Ansprüche 1 bis 22, dadurch gekennzeichnet, daß der obere Schenkel des längeren (34, 35 bzw. 36, 37) und des kürzeren Wurfflügels (38, 39 bzw. 40, 41) zumindest im Bereich der radialen Erstreckung des Auslaufs (4) von der vorlaufenden Kante nach hinten und unten schwach geneigt ist.

Fig. 1

Fig. 2

Fig. 3

Fig. 4

Fig. 5

Fig. 6

Fig.7

Fig. 8

Fig. 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-1 557 916 (H. DREYER) <br> * Seiten 4,5 * <br> --- | 1,2,6, 13 | A 01 C 17/00 |
| Y <br> A <br> A | DE-U-8 705 447 (AMAZONEN-WERKE) <br> * Ansprüche 1,2,3 * <br> * Ansprüche 7,8 * <br> * Anspruch 14 * <br> --- | 1,2,6, 13 <br> 4,5 <br> 3,5 | |
| A <br><br> A | EP-A-0 170 605 (J. BUREL) <br> * Seiten 2-4,11,12; Abbildungen 1,4,6 * <br> * Ansprüche 1,2,14 * <br> --- | 1,2,7 <br><br> 14,15 | |
| A | EP-A-0 281 885 (AMAZONEN-WERKE) <br> * Seiten 16-19 * <br> --- | 1,4,5 | |
| A,P | EP-A-0 330 920 (AMAZONEN-WERKE) <br> * Anspruch 1; Figur 2 * <br> --- | 1,4,5, 17,18 | |
| A | DE-A-2 906 791 (H. DREYER) <br> * Seiten 1,2 * <br> --- | 7 | |
| A | EP-A-0 240 734 (AMAZONEN-WERKE) <br> * Seiten 2,4,5 * <br> --- | 1,17,18 | RECHERCHIERTE SACHGEBIETE (Int. Cl.5) <br><br> A 01 C 17/00 |
| A | EP-A-0 292 650 (AMAZONEN-WERKE) <br> * Ansprüche * <br> ----- | 4,5,17, 18 | |

Der vorliegende Recherchenbericht wurde für alle Patentansprüche erstellt

| Recherchenort | Abschlußdatum der Recherche | Prüfer |
|---|---|---|
| DEN HAAG | 28-09-1990 | FONTENAY P.H.E.V. |